Europäisches Patentamt

(19) European Patent Office

Office européen des brevets

(11) Publication number: **0 233 213 B1**

# (12) EUROPEAN PATENT SPECIFICATION

(45) Date of publication of patent specification:
06.03.91 Bulletin 91/10

(51) Int. Cl.⁵: **E06B 3/66, F24J 2/50**

(21) Application number: **86904431.3**

(22) Date of filing: **18.06.86**

(86) International application number:
**PCT/SE86/00296**

(87) International publication number:
**WO 86/07622 31.12.86 Gazette 86/28**

(54) **IMPROVEMENTS IN OR RELATING TO THERMALLY INSULATING GLAZING.**

(30) Priority: **21.06.85 GB 8515811**

(43) Date of publication of application:
**26.08.87 Bulletin 87/35**

(45) Publication of the grant of the patent:
**06.03.91 Bulletin 91/10**

(84) Designated Contracting States:
**DE FR GB SE**

(56) References cited:
**SE-B- 405 141**
**US-A- 1 099 959**
**US-A- 3 138 197**
**US-A- 4 023 556**
**US-A- 4 120 288**

(73) Proprietor: **FINSUN ENERGI AB**
**Gaddvägen 8**
**S-612 00 Finspang (SE)**

(72) Inventor: **WILSON, Gunnar**
**Gäddvägen 8**
**S-612 00 Finspang (SE)**
Inventor: **SVENSSON, Lars**
**Sportvägen 10**
**S-810 70 Älvkarleby (SE)**

(74) Representative: **Frankland, Nigel Howard et al**
**FORRESTER & BOEHMERT**
**Widenmayerstrasse 4/I**
**W-8000 München 22 (DE)**

## Description

The present invention relates to thermally insulating glazing.

It has been proposed to provide thermally insulating glazing, one example being the increasingly conventional double glazing used on windows in domestic houses. However, thermally insulating glazing is used in other applications, and in particular is utilised in conjunction with certain types of solar energy collector.

Such thermally insulating glazing forms the top part of a housing constituting a solar collector. A chamber, within the housing, located beneath the thermally insulating glazing is raised to an elevated temperature by the action of sunlight falling on the solar energy collector. The thermally insulating glazing assist in maintaining as high a temperature as possible within the appropriate chamber (US-A-4120288).

It has, of course, been proposed to utilise in this context a glazing arrangement consisting of two layers of glass, slightly spaced apart. This arrangement suffers from a disadvantage that only between 84 and 92% of the energy falling on a sheet of glass in the form of sunlight actually passes through the glass. The rest of the energy is lost either by reflection or by transmission losses. Thus, when the sunlight has to pass through two layers of glass a substantial proportion of the energy initially available to the solar energy collector is lost before the light has passed through the glazing arrangement.

It has been found that up to 97% of the energy present in sunlight can pass through a foil of transparent plastics material, such as a film of polytetrafluoroethylene as sold under the Registered Trade Mark TEFLON. Thus it has generally been proposed to utilise a thermally insulating glazing arrangement consisting of one layer of glass and one layer of such a thin transparent plastic film.

Attempts have been made to stretch the foil of plastic film on a frame that supports the sheet of glass and also on a separate frame spaced slightly from the frame that supports the glass. However, it has been found that when such a plastics material foil is subjected to a high temperature, the foil effectively expands, and thus looses tension and sags. Since, in utilising such a thermally insulating glazing arrangement, the sheet of glass will be on the outside and the sheet of foil will be on the inside, when the thermally insulating glazing is used with a solar collector, as mentioned above, the foil will be subjected to the high temperature, and will thus sag. As a result of the effects of static electricity the foil may then cling to the glass.

Attempts have been made to support the foil on an open wire mesh. Thus only relatively short lengths of foil are unsupported, thus tending to minimise the degree to which the foil can sag, even if the foil does expand. However, the presence of the wires does tend to reduce the amount of energy that can be usefully collected by the solar energy connector, and also the wires can actually cut the foil, which is clearly disadvantageous.

The present invention seeks to provide an improved thermally insulating glazing arrangement.

According to this invention there is provided a thermally insulating glazing arrangement, said arrangement including a rigid sheet of transparent material (such as glass) and spaced therefrom, a thin film of transparent plastics material, characterised in that the thin film is mounted in position on at least one resilient member, the resilient member being deformed so that the resilient member imparts tension to the film and maintains tension in the film even if the film expands thermally.

Conveniently the resilient member is in the form of an elongate flange extending substantially perpendicularly to the plane of said rigid glazing material.

Advantageously said resilient member is mounted on a frame separate from the rigid glazing material.

Preferably the resilient member is connected directly or indirectly to said rigid glazing material.

Conveniently the resilient member is formed as part of a bead, the bead being mounted on the edge of the rigid sheet of transparent material.

Preferably the resilient member is formed of a rubber or rubber-like material.

Preferably beads are mounted on at least two opposed edges of said rigid sheet of transparent material, deformable resilient members being mounted on said beads and extending away from the plane of said rigid sheet of transparent material, a thin film of transparent plastics material being located over said protruding resilient members and being secured in position in such a way that the resilient members are deformed to apply tension to the film of plastics material, the thin film of plastics material being retained in spaced parallelism with the rigid sheet of transparent material.

Preferably the thin film of plastics material is a thin film of polytetrafluorethylne.

Conveniently said thin film of plastics material is adhered to the said beads to retain the film in position.

In one embodiment the glazing arrangement is fabricated by locating two beads in position, on two opposed edges of the rigid sheet of transparent material lightly stretching the film across the beads and securing the edges of the film in position and subsequently applying pressure to part of the film in order to deform said resilient members on the beads so that they apply tension to the film.

Preferably the film is initially adhered to edges of the beads perpendicular to the plane of the rigid sheet of transparent material and subsequently pressure is applied to parts of the film between said adhered portions and the regions of the film touching the resilient members so that said portions of the film are brought into contact with the bead, thus deforming the resilient members.

Conveniently the said film is deformed in such a way that it is adhered to the bead.

The film may be deformed when the glazing assembly is inserted into a supporting frame.

Preferably said frame defines a seat and the glazing assembly is retained in position in the seat by means of retaining strips held in position by screws or the like.

Said glazing arrangement may form part of a triple or quadruple glazing assembly.

According to a further aspect of this invention there is provided a method of fabricating a thermally insulating glazing assembly, said method comprising the steps of taking a sheet of rigid glazing material, and a film of transparent plastics material and locating the film relative to the sheet so that it is retained in spaced parallelism with the sheet of rigid glazing material, characterised in that the method comprises mounting beads on at least two opposed edges of the sheet, each bead carrying a deformable resilient element extending away from the plane defined by the sheet of rigid glazing material, loosely stretching the film of transparent plastics across said resilient members, and securing the film in position in such a way that the resilient members are deformed to retain the film under tension in spaced parallelism with the sheet of rigid glazing material.

Preferably the film is adhered to the beads to retain the film in position.

Conveniently the film is initially adhered to one part of the bead, whilst the film is under relatively light tension, and is then subsequently adhered to another part of the bead, thus deforming the said resilient elements.

In order that the invention may be more readily understood, and so that further features thereof may be appreciated, the invention will now be described, by way of example, with reference to the accompanying drawings in which :

    FIGURE 1 is a sectional part perspective view of part of a glazing arrangement in accordance with the invention whilst it is being fabricated,

    FIGURE 2 is a cross sectional view through the arrangement of Figure 1 at a subsequent stage of fabrication,

    FIGURE 3 is a view corresponding to Figure 2 at the next subsequent stage of fabrication,

    FIGURE 4 is an exploded view showing the arrangement of Figure 3 being inserted into a permanent frame,

    FIGURE 5 is a cross sectional view of one rubber bead that may be utilised in performing the invention, and

    FIGURE 6 is a cross sectional view of another form of rubber bead that can be utilised in performing the invention.

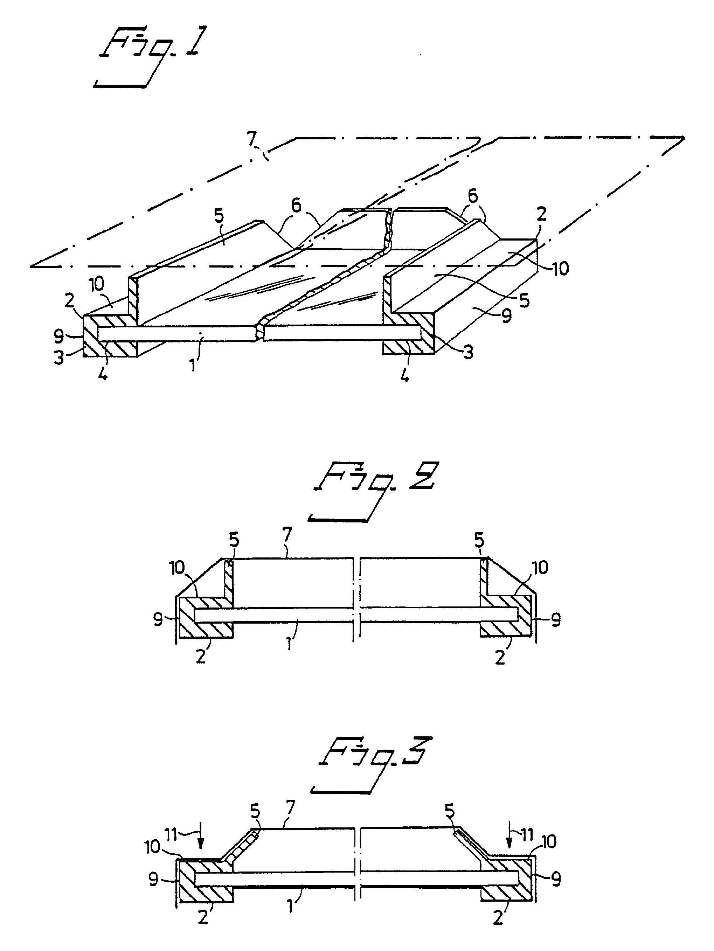

Referring initially to Figure 1 of the accompanying drawings, in forming a thermally insulating glazing arrangement in accordance with the invention initially a rigid sheet of glass 1 is taken, although it may be practicable to utilise a rigid sheet plastic material.

As shown in the drawing, strips of rubber bead 2 are engaged with the four edges of the sheet of glass 1. Each bead has a portion 3 defining a substantially U-shaped channel 4 dimensioned to engage the edge of the sheet of glass as a friction fit. Adjacent the mouth of the channel the bead defines a protruding resilient flange 5, the flange 5 extending, as shown in Figure 1, substantially perpendicularly to the plane of the glass sheet 1. As will become apparent hereinafter, the flange 5 is resilient.

In the region of the corners of the sheet 1 each flange 5 is bevelled, 6, for a purpose that will become clear hereinafter.

Illustrated in Figure 1 is a film 7 of thin transparent plastics material, such as a thin film of polytetrafluorethylene as sold under the Registered Trade Mark TEFLON. The film 7 of plastics material is to be secured to the remaining above-described elements to form a thermally insulating glazing arrangement.

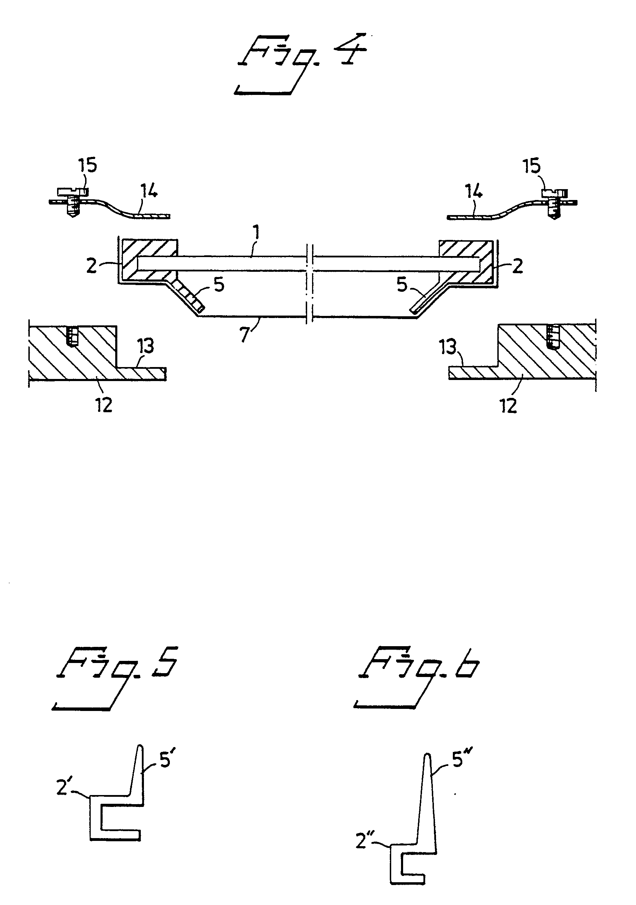

The first step of securing the film 7 in position is to provide the outer surfaces 9, 10 of each bead with an adhesive coating material. The film 7 is then lowered on top of the glass 1 with the associated beads 2, so that the film rests on the upstanding flanges 5. With the application of a slight amount of tension, so that the film is reasonably tight, the film is then pressed against the side faces 9 of the beads, and is thus adhered to those faces. The condition illustrated in Figure 2 is then obtained with the film extending from the side face 9 of the bead 2, as shown at the left of the figure, angularly to the top of the flange, substantially horizontally parallel with the sheet of glass 1, and angularly down from the flange 5 at the right hand side of the figure, to the side face 9 of the bead 2 shown at the right hand side of the figure. By applying pressure as indicated by the arrows 11 shown in Figure 3 the angularly extending portion of the film 7 between the face 9 and the flange 5 of each bead is pressed downwardly to contact with the surface 10 of each bead, and since the surface 10 has been coated with adhesive, the film is adhered thereto. As the film is pressed down in this way the tension in the film increases and the resilient flanges 5 are bent inwardly, as shown in Figure 3. Since the flanges are resilient, the flanges thus exert a bias on the film 7 tending to maintain tension in the film.

It will be appreciated that when the flanges bend inwardly, as shown in Figure 3, in the regions of the corner of the sheet of glass 1, as a consequence of the provision of the bevelled portions 6, the flanges do not interfere with each other.

The thermally insulating glazing assembly, as shown in Figure 3, may then be inverted and may be inserted in a supporting frame, as shown in Figure 4.

The frame 12 may be formed of any suitable material and defines a seat 13 adapted to receive the thermally insulating glazing assembly. The assembly unit may be retained in the seat by means of retaining strips 14 held in position by means of screws 15 but, of course, many other possible arrangements could be utilised.

Of course, this insertion step may actually perform the pressing in the direction of the arrows 11. The frame abutting the beads will assist in keeping the film adhered to the beads.

The frame 12 may form part of a solar energy collector, and the arrangement may be such that the film 7 is, in use of the arrangement, subjected to a high temperature.

It will be appreciated that if the film 7 is subjected to a high temperature the film will tend to expand. However, when the film expands the resilient flanges 5 will tend to move back towards their initial condition, i.e. they will tend to move from the inclined position as shown in Figure 3, to the position in which they are perpendicular to the plane of the glass as shown in Figure 2. Thus the resilient flanges 5 will always maintain the film 7 under tension, thus preventing the film from sagging and also preventing the film from being drawn into contact with the glass by electrostatic forces.

It will thus be appreciated that since, in the described arrangement, there is a resilient element which is initially deformed so that it applies a tension to the plastics film 7, even if the plastics film expands the resilient element will maintain tension in the film, thus preventing the film from moving from its desired position.

It is to be appreciated that whilst one particular design of bead has been illustrated in figures 1 to 4 for the purposes of explanation, many different types of bead could be utilised. For example, as shown in Figure 5, which shows a bead 2' the flange 5' could be of a tapering configuration. In such a case the tip of the flange would tend to bend more than the base of the flange, and thus when the film is under tension each flange will tend to be bent in an arcuate manner.

Figure 6 illustrates another bead 2″ where the flange 5″ is of significant lengt. In utilising such a bead the film 7 will be spaced a considerable distance from the plane of the glass 1, but nevertheless will be retained under adequate tension to keep the film relatively taut.

The precise properties of the resilient flange will depend upon the design of the flange and the resilience of the rubber or other material from which the bead and flange are made.

Whilst the invention has been described with primary reference to a solar energy collector it is to be appreciated that a thermally insulating glazing unit as described above may be utilised as part of a triple glazing arrangement or as part of a quadruple glazing arrangement. As will be appreciated, in normal thermal insulating glazing as used in houses or the like, it is necessary to have a sheet of glass on the outside of the thermal insulating glazing, since this part of the glazing will be subjected to the effect of wind, rain, snow etc, and it is also desirable to have a sheet of glass or other rigid glazing material on the interior of the thermally insulating glazing arrangement. However, it will be understood that if one of the sheets of glass present in a conventional double-glazed arrangement is replaced by a thermally insulating glazing assembly a structure as shown in Figure 3, with the thin film 7 being located between the two sheets of glass of the double glazing arrangement, effectively a triple glazing arrangement is provided, the central glazing element being constituted by the thin film 7. A quadruple glazing unit can be made from two assemblies as shown in Figure 3. This may well prove to be very advantageous, especially since the thin film 7 transmits virtually all the light falling on it, there only being minimal reflection and transmission losses.

Of course, thermal insulating glazing arrangements in accordance with the invention may find many different applications and may thus, for example, be utilised as windows at elevated positions, for example in factories, in which case it may be necessary for the thin film of plastics material to be replaced at regular intervals. It may be cheaper, however, to replace the plastics material film, rather than to clean ordinary glazed windows, especially if the factory is utilised to perform a dirty process, or, for example, if paint spray can fall on the windows.

it is not necessary for the resilient member that applies the tension to the film to be mounted directly on the glass sheet, since the resilient member could be mounted on a supporting frame or could be mounted in some other way.

Whilst the described resilient member is in the form of an unbroken flange, it is to be appreciated that the resilient member could be constituted by a plurality of separate resilient fingers, for example.

## Claims

1. A thermally insulating glazing arrangement, said arrangement including a rigid sheet of transparent material (1) and spaced therefrom, a thin film of transparent plastics material (7), characterised in that the thin film (7) is mounted in position on at least one resilient member, the resilient member (5) being deformed so that the resilient member (5) imparts tension to the film (7) and maintains tension in the film (7) even if the film (7) expands thermally.

2. A glazing arrangement according to Claim 1 wherein the resilient member (5) is in the form of an elongate flange extending substantially perpendicularly to the plane of said rigid glazing material (1).

3. A glazing arrangement according to Claim 1 or Claim 2 wherein beads (2) are mounted on at least two opposed edges of said rigid sheet of transparent material (1), deformable resilient members (5) being mounted on said beads (2) and extending away from the plane of said rigid sheet of transparent material (1), a thin film of transparent plastics material (7) being located over said protruding resilient members (5) and being secured in position in such a way that the resilient members are deformed to apply tension to the film of plastics material (7), the thin film of plastics material (7) being retained in spaced parallelism with the rigid sheet of transparent material (1).

4. A glazing arrangemment according to Claim 3 wherein said thin film of plastics material (7) is adhered to the said beads (2) to retain the film (7) in position.

5. A method of fabricating a thermally insulating glazing assembly, said method comprising the steps of taking a sheet of rigid glazing material (1), and a film of transparent plastics material (7) and locating the film (7) relative to the sheet (1) so that it is retained in spaced parallelism with the sheet of rigid glazing material (1), characterised in that the method comprises mounting beads (2) on at least two opposed edges of the sheet (1), each bead (2) carrying a deformable resilient element (5) extending away from the plane defined by the sheet of rigid glazing material (1), loosely stretching the film of transparent plastics (7) across said resilient members (5), and securing the film (7) in position in such a way that the resilient members (5) are deformed to retain the film (7) under tension in spaced parallelism with the sheet of rigid glazing material (1).

6. A method according to Claim 5 wherein the film (7) is adhered to the beads (2) to retain the film in position.

7. A method according to Claim 6 wherein the film (7) is initially adhered to one part of the bead (2), whilst the film (7) is under relatively light tension, and is then subsequently adhered to another part of the bead (2), thus deforming the said resilient elements (5).

8. A method according to Claim 5, 6 or 7 wherein the film (7) is initially adhered to edges (9) of the beads (2) perpendicular to the plane of the rigid sheet of transparent material (1) and subsequently pressure is applied to parts of the film (7) between said adhered portions and the regions of the film (7) touching the resilient members (5) so that said portions of the film are brought into contact with the bead (2), thus deforming the resilient members (5).

## Ansprüche

1. Eine thermisch isolierende Verglasungsanordnung, die eine starre Scheibe eines transparenten Materials (1) und beabstandet davon einen dünnen Film von Plastikmaterial (7) aufweist, dadurch gekennzeichnet, daß der dünne Film (7) von mindestens einem elastischen Element in Position gehalten wird, wobei das elastische Element (5) so verformt wird, daß das elastische Element (5) eine Spannung auf den Film (7) ausübt und eine Spannung in dem Film (7) so gar wenn der Film (7) thermisch expandiert, aufrecht erhält.

2. Eine Verglasungsanordnung nach Anspruch 1, dadurch gekennzeichnet, daß das elastische Element (5) die Form eines verlängerten Flansches, der im wesentlichen senkrecht zur Ebene des starren Verglasungsmaterials (1) steht, hat.

3. Eine Verglasungsanordnung nach Anspruch 1 oder 2, dadurch gekennzeichnet, daß Falze (2) auf wenigstens zwei gegenüberliegenden Kanten der starren Scheibe transparenten Materials (1) angebracht sind, deformierbare elastische Elemente (5) auf diesen Falzen (2) angebracht sind und von der Ebene der starren Scheibe (5) von transparentem Material (1) wegweisen, ein dünner Film aus transparenten plastikmaterial (7) über die vorstehenden elastischen Elemente (5) angeordnet ist und so in Position gehalten wird, daß die elastischen Elemente (5) deformiert werden, um Spannung auf den Film aus Plastikmaterial (7) auszuüben, wobei der dünne Film aus plastikmaterial (7) in beabstandeter parallelität mit der starren Scheibe von transparentem Material (1) gehalten wird.

4. Eine Verglasungsanordnung nach Anspruch 3, dadurch gekennzeichnet, daß der dünne Film aus Plastikmaterial (7) an die Falze (2) angeklebt ist, um den Film (7) in position zu halten.

5. Ein Verfahren zur Herstellung von thermisch isolierter Verglasungsanordnung, wobei das Verfahren folgende Schritte beinhaltet : Nehmen einer Scheibe eines starren Verglasungsmaterials (1), und eines Films aus transparentem Plastikmaterial (7) und Anbringen des Films (7) relativ zur Scheibe (1) so daß es in beabstandetem parallelität mit der Scheibe aus starren Verglasungsmaterial (1) gehalten wird, dadurch gekennzeichnet, daß das Verfahren beinhaltet : Befestigen von Falzen (2) an wenigstens zwei gegenüberliegenden Kanten der Scheibe (1), wobei jeder Falz (2) ein deformierbares elastisches Element (5) trägt, das von der Ebene die durch die Scheibe aus starrem Verglasungsmaterial (1) definiert wird, fortweist, Spannen des Films aus transparentem plastikmaterial lose über die elastischen Elemente (5) und Befestigens des Filmes (7) derart in Position, daß die elastischen Elemente (5) deformiert werden, um den Film (7) unter Spannung in beabstandetem Parallelität mit der Scheibe aus starren Verglasungsmaterial (1) zu halten.

6. Ein Verfahren nach Anspruch 5, dadurch gekennzeichnet, daß der Film (7) an die Falze (2) geklebt wird, um den Film in Position zu halten.

7. Ein Verfahren nach Anspruch 6, dadurch gekennzeichnet, daß der Film (7) anfangs an einen Teil des Falzes (2) geklebt wird, während der Film (7) sich unter relativ leichter Spannung befindet, und anschließend an den anderen Teil des Falzes (2) geklebt wird, wodurch die elastischen Elemente (5) deformiert werden.

8. Verfahren nach Anspruch 5, 6 oder 7, dadurch gekennzeichnet, daß der Film (7) anfangs zur Kante (9) des Falzes (2) senkrecht zur Ebene der starren Scheibe aus transparentem Material (1) geklebt wird und anschließend Druck auf Teile des Film (7) zwischen den angeklebten Teilen und Regionen des Films, die die elastischen Elemente (5) berühren, ausgeübt wird, so daß diese Teile des Films in Kontakt mit dem Falz (2) gebracht werden, wodurch die elastischen Elemente (5) verformt werden.

## Revendications

1. Un dispositif vitré ou de vitrage isolant thermiquement, ledit dispositif comprenant une feuille rigide en matériau transparent (1) et espacé de ce dernier, un film mince de matériau plastique transparent (7), caractérisé en ce que le film mince (7) est monté en position sur au moins un élément elastisque, l'élément élastique (5) étant déformé de telle façon que l'élément élastique (5) communique une tension au film (7) et maintienne la tension dans le film (7) même si le film (7) se dilate thermiquement.

2. Un dispositif vitré selon la revendication 1 dans lequel l'élément élastique (5) est en forme d'un rebord allongé s'étendant sensiblement perpendiculairement par rapport au plan dudit materiau rigide vitré (1).

3. Un dispositif vitré selon la revendication 1 ou la revendication 2 dans lequel des tasseaux (2) sont montés sur au moins deux bords opposes de ladite feuille rigide de matériau transparent (1), des éléments élastisques déformables (5) étant montés sur lesdits tasseaux (2) et s'étendant à partir du plan de ladite feuille rigide de matériau transparent (1), un film mince de matériau plastique transparent (7) étant situé au-dessus desdits éléments élastiques en saillie (5) et étant fixés en position de telle façon que les éléments élastiques soient déformés pour appliquer une tension au film en matériau plastique (7), le film mince de matériau plastique (7) étant retenu parallèlement et espacé de la feuille rigide de matériau transparent (1).

4. Un dispositif vitré selon la revendication 3 dans lequel ledit film mince de matériau plastique (7) est maintenu en adhérence ou adhère auxdits tasseaux (2) pour retenir le film en position.

5. Une méthode de fabrication d'un assemblage vitré ou de vitrage isolant thermiquement, ladite méthode comprenant les étapes de prise d'une feuille de matériau rigide vitré (1), et un film en matériau plastique transparent (7), et mise en place du film (7) par rapport à la feuille (1) de façon à la retenir parallèle et espacée avec la feuille de matériau de vitrage rigide (1), caractérisé en ce que la méthode comprend des tasseaux de montage (2) sur au moins deux bords opposés de la feuille (1), chaque roulement (2) portant un élément élastisque déformable (5) s'étendant à partir du plan défini par la feuille de matériau rigide de vitrage (1), étirant de façon lache le film de plastique transparent (7) au travers desdits éléments élastisques (5), et fixant le film (7) en position de telle façon que les membres élastisques (5) sont déformés pour retenir le film (7) sous tension de façon parallèle et espacée avec la feuille de matériau rigide glaçant (1).

6. Une méthode selon la revendication 5 dans laquelle le film (7) adhère aux tasseaux (2) pour retenir le film en position.

7. Une methode selon la revendication 6, dans laquelle le film (7) est initialement maintenu par adhérence à une partie du tasseau (2), tandis que le film (7) est sous une tension relativement légère et est ainsi en conséquence maintenu en adhérence à une autre partie de tasseau (2), de façon à déformer lesdits éléments élastisques (5).

8. Une méthode selon la revendication 5, 6 ou 7 dans laquelle le film (7) est initialement maintenu par adhérence aux bords (9) des tasseaux (2) perpendiculairement au plan de la feuille rigide du matériau transparent (1) et de façon subséquente une pression est appliquée aux parties du film (7) entre lesdites portions adhérées et les régions du film (7) touchant les membres élastisques (5) de façon à ce que lesdites positions du film soient amenées en contact avec le tasseau (2), en déformant ainsi les membres élastisques (5).

*Fig. 1*

*Fig. 2*

*Fig. 3*

Fig. 4

Fig. 5

Fig. 6